# EUROPEAN PATENT SPECIFICATION

(11) **EP 2 404 838 B1**
(45) Date of publication and mention of the grant of the patent: **04.06.2014**
(21) Application number: 10748697.9
(22) Date of filing: 01.03.2010
(51) Int. Cl.: B65D 1/40, B32B 27/00, B32B 27/36, B65D 1/02, B65D 65/40

(54) **MULTILAYERED PLASTIC CONTAINER HAVING SUPERIOR DROP IMPACT RESISTANCE**
MEHRSCHICHTIGER KUNSTSTOFFBEHÄLTER MIT ERHÖHTER FALL- UND SCHLAGFESTIGKEIT
RÉCIPIENT EN PLASTIQUE MULTICOUCHE PRÉSENTANT UNE RÉSISTANCE SUPÉRIEURE AUX CHOCS DUS À UNE CHUTE

(30) Priority: 03.03.2009 JP 2009049401
(43) Date of publication of application: 11.01.2012
(73) Proprietor: Toyo Seikan Kaisha, Ltd., Shinagawa-ku Tokyo 141-8640 (JP)
(72) Inventor: NAKATANI, Toyohiko, Yokohama-shi Kanagawa 230-0001 (JP); KATSUTA, Hidehiko, Yokohama-shi Kanagawa 230-0001 (JP); YOKOTE, Yoshitaka, Yokohama-shi Kanagawa 230-0001 (JP); YOSHIKAWA, Masayuki, Yokohama-shi Kanagawa 230-0001 (JP)
(74) Representative: Manley, Nicholas Michael
(86) International application number: PCT/JP2010/053208
(87) International publication number: WO 2010/101102

(56) References cited:
- EP-A1- 1 498 355
- EP-A1- 1 681 239
- EP-A1- 2 281 752
- EP-A1- 2 311 624
- DE-A1-102005 018 245
- JP-A- 63 294 342
- JP-A- 2002 138 242
- JP-A- 2005 239 275
- JP-B- 8 013 499
- JP-B2- 2 577 807
- JP-Y2- 3 048 015

## Description

### TECHNICAL FIELD

This invention relates to a multilayered plastic container and, more specifically, to a multilayered plastic container forming a barrier layer as an intermediate layer and featuring excellent barrier property and drop impact resistance.

### BACKGROUND ART

In an attempt to decrease the material cost of plastic packing containers, efforts have been made to decrease the weight by decreasing the thickness of the container walls. To compensate for a decrease in the preservability of the contents stemming from a decrease in the thickness of the container wall or to further improve the preservability, however, attempts have heretofore been made to form the container wall in a multilayered structure using a polyester resin as inner and outer layers, and using, as an intermediate layer, a functional resin such as an ethylene/vinyl alcohol copolymer or a xylylene group-containing polyamide resin for improving gas-barrier property, or a cyclic olefin copolymer for improving the water vapor (water)-barrier property (patent document 1).

### Prior Art Document:

Patent document 1: JP-A-2005-067637

EP 2 281752 A1 describes a laminated bottle with a gas barrier resin layer arranged between polyester resins layers. The gas barrier resin layer comprises a plurality of quadrangular segments with two sides extending along the bottle axis, and two sides extending around the bottle axis, wherein the segments are arranged at a distance to each other via connecting layers, which connect the inner layer and the outer layer.

EP 2 311624 A1 describes a biaxially drawn, blow molded bottle characterized in that vertical connecting zones having no intermediate layer and having substrate layers welded directly with each other are formed in parallel in a circumferential direction and in a plural number along an axial direction of the bottle and are disposed on both right and left sides of each intermediate layer segment to be formed in this height range, and that horizontal connecting zones having no intermediate layer and having substrate layers welded directly with each other are also formed in parallel in an axial direction and in a plural number along a circumferential direction of the bottle and are disposed on both upper and lower sides of each intermediate layer segment to be formed, thus allowing the intermediate layer to be segmentalized in the circumferential and axial directions by both the vertical and horizontal connecting zones.

EP 1 681 239 A1 describes a preform having a body comprising layer means and barrier means adjacent to said layer means, said barrier means being substantially impermeable to visible light, said layer means and said barrier means being made of polyethylene terephthalate; a method for obtaining a preform comprises providing a body of said preform provided with layer means and barrier means adjacent to said layer means, said barrier means being substantially impermeable to visible light, said providing comprising forming said layer means and said barrier means by co-injection; a container delimited by wall means comprising layer means and barrier means adjacent to said layer means, said barrier means being substantially impermeable to visible light, wherein said layer means and said barrier means is made of polyethylene terephthalate.

DE 102005018245 describes a preform for blow molding, wherein the wall of the preform at least partially consists of at least three layers, namely two outer layers and, arranged between the cover layers a barrier layer. A preform can be produced with the aid of a hollow body with suitable barrier properties, wherein manufacture of the preform is simple and has improved properties over known preforms. It is proposed, according to the invention, that the outer layers and the barrier layer consists essentially of the same thermoplastic plastic material, wherein the thermoplastic plastic material of the barrier layer is mixed with a barrier material.

EP 1 498 355 A1 describes a biaxially drawn, blow-molded bottle and its preform comprise at least a layer of a gas barrier material laminated inside the PET resin layers, a functional portion having a screw thread raised spirally in the upper portion of neck and also having a stop ring disposed under the screw thread, and a neck ring disposed at the lower end of the neck. In these preform and bottle, the leading edge of the gas barrier layer is positioned at a half height of the neck ring where the most advanced front of the leading edge neither reaches a half height of the stop ring nor extends to the functional portion. It is intended here that the neck would not be affected by the shrinking deformation caused by the existence of the gas barrier layer in the functional portion of the neck, which is treated for thermal crystallization.

### Outline of the Invention:

Problems that the Invention is to Solve:

Preservability of the contents in the containers can be secured by providing an intermediate layer of a barrier resin and forming the walls of the containers in a multilayered structure as described above. However, it was learned that the conventional multilayered containers having decreased thicknesses and weights are more likely to develop inter-layer peeling or cracking when they are caused to fall than the single-layered containers.

It is, therefore, an object of the present invention to provide a multilayered plastic container having a decreased thickness and weight yet featuring excellent barrier property and drop impact resistance.

### Means for Solving the Problems:

According to the present invention, there is provided a pressure-resistant multilayered plastic container comprising, in at least a side wall portion of the container, an inner layer and an outer layer of a polyester resin, and an intermediate barrier layer of a barrier resin, the container bottom portion including feet having grounding portions and valleys that are alternately formed, characterised in that the inner layer and the outer layer are formed of a polyethylene terephthalate, and the intermediate barrier layer is formed of a mixture of the polyethylene terephthalate and the barrier resin and the lower end of said intermediate barrier layer in the radial direction of the container is positioned on the grounding portion of the container bottom portion or outside of the grounding portion of the container bottom portion in the radial direction of the container, and the lower end of said intermediate barrier layer in the axial direction of the container is positioned at a central portion between said grounding portion and the uppermost end of the valley or higher than the central portion.

In the multilayered plastic container of the present invention, it is desired that:

### 1. The barrier resin contains a clay.

As described above, the multilayered plastic containers having decreased thickness and decreased weight easily develop interlayer peeling or cracks in the bottom portion if they fall down and receive impact. Therefore, the present inventors have conducted a keen study concerning the cause. As a result, the inventors have discovered that in the conventional multilayered plastic containers, a multilayered structure has been formed even in the bottom portion except the central portion of the bottom portion, stress concentrates in the boundary between the portion where the multilayered structure has been formed and the single-layered portion at the center of the bottom portion, cracks occur in the boundary, interlayer peeling occurs starting from the boundary and when the multilayered structure has been formed over the whole surface of the bottom portion, too, the interlayer boundary is brittle at the gate portion, and interlayer peeling and cracks occur upon receiving impact.

Cracks and interlayer peeling occur to a conspicuous degree particularly in the pressure-resistant container which has a large deformation resistance against the internal pressure and a petaloidal bottom shape with feet protruding downward in the axial direction of the container to impart resistance against the pressure so as to be capable of being filled with a content which spontaneously produces pressure.

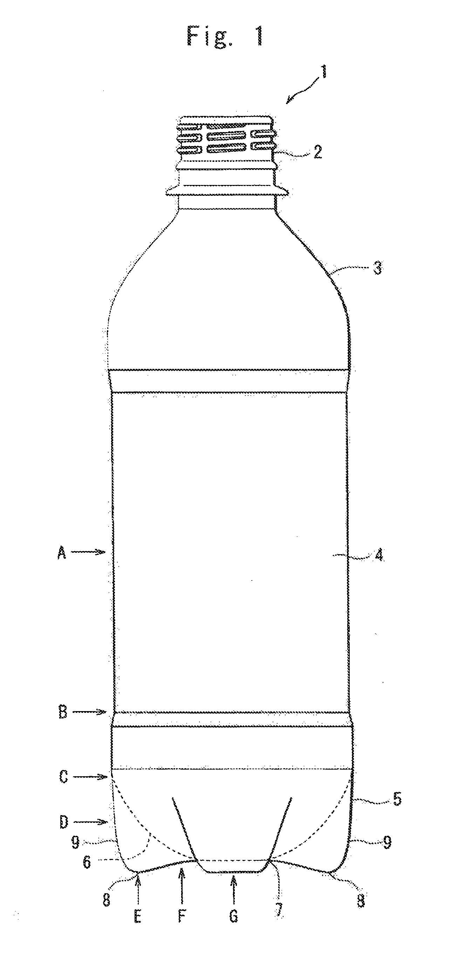

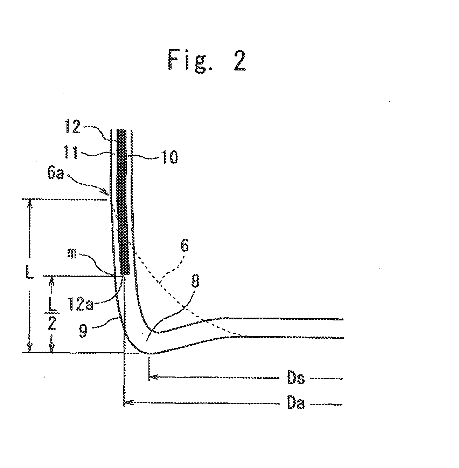

FIG. 1 is a side view illustrating a multilayered plastic container of the present invention, and FIG. 2 is a sectional view illustrating a portion of a layer structure of the bottom portion of the multilayered plastic container of the present invention. The multilayered plastic container is molded by subjecting a two-kind-three-layer preform to the biaxial stretch-blow molding, the two-kind-three-layer preform being constituted by an inner layer and an outer layer of a polyester resin, and an intermediate layer of a barrier resin.

The multilayered plastic container 1 includes a mouth-and-neck portion 2, a shoulder portion 3, a body portion 4 and a bottom portion 5 of a petaloidal shape forming a plurality of valleys 6, 6, --- positioned on an imaginary curve which is convex downward in the axial direction of the container, and feet 9, 9, --- positioned among the neighboring valleys 6, 6, protruding downward beyond the valleys 6 in the axial direction of the container and extending outward in the radial direction of the container from the root portion 7 at the center of the bottom portion so that their ends serve as grounding portions 8.

In the multilayered plastic container of the present invention as will be obvious from Fig. 2, the lower end 12a of an inner layer 10, of an outer layer 11 and of an intermediate barrier layer 12 formed of a barrier resin, is positioned on the outside of the grounding portion 8 of the container in the radial direction of the container, i.e., the radius (Da) of a portion where the lower end 12a is positioned is equal to, or larger than, the radius (Ds) at the position of the grounding portion 8 (Da > Ds in the embodiment of Fig. 2). Besides, the lower end 12a is located at a position m one-half (L/2) the vertical distance L between the grounding portion 8 and the uppermost end 6a of the valley 6 over the ground surface, or is located over the one-half distance (located over the position m of one-half the distance in the embodiment of Fig. 2).

In the present invention, the lower end of the intermediate barrier layer is positioned at the grounding portion of the container bottom portion or on the outside of the grounding portion in the radial direction of the container making it possible to effectively prevent cracks from occurring in the portion where the lower end of the intermediate barrier layer is located in case the container has fallen down. As shown in Fig. 2, in particular, the lower end of the intermediate barrier layer is positioned at the central portion between the grounding portion and the uppermost end of the valley or over the central portion making it possible to greatly decrease the interlayer peeling.

That is, in the bottles in which the lower end of the intermediate barrier layer is positioned on the inner side of the grounding portion of the container bottom portion in the radial direction of the container (Comparative Examples 1 and 2), cracks occur at the lower end of the intermediate barrier layer and interlayer peeling also occur starting from the portion where cracks occur. In the bottles in which the lower end of the intermediate barrier layer is positioned on the outside of the grounding portion of the container bottom portion in the radial direction of the container, on the other hand, no crack or no interlayer peeling is observed (Examples 1, 2 and 4 to 6). In the bottles in which the lower end of the intermediate barrier layer is positioned at the grounding portion of the container bottom portion in the radial direction of the container (Examples 3 and 7), interlayer peeling occur to some extent but no crack occur, manifesting excellent drop impact resistance of the multilayered plastic containers of the present invention.

Further, when the multilayered plastic container of the invention is used as a pressure-resistant container for which a high gas-barrier property is required, in particular, it is desired that the lower end of the intermediate barrier layer is positioned at least at the uppermost end of the bottom portion or is positioned on the lower side of the uppermost end (at a position B or lower than the position B in the embodiment of Fig. 1).

Even if the multilayered plastic container may include a portion where no intermediate barrier layer is formed as a result of increasing the thickness of the intermediate barrier layer in the body portion to meet barrier performance required for the multilayered plastic container, it is made possible to secure barrier performance nearly comparable to that of the conventional multilayered plastic containers.

That is, as will become obvious from Examples appearing later, upon forming the preform by using the resin (PET) for constituting the inner layer and the outer layer and the barrier resin in the same total amount irrespective to the position of the lower end of the intermediate barrier layer, even the bottles in which the intermediate barrier layer has not been formed on the inside of the grounding portion of the bottom portion of the present invention (Examples 1 to 3) exhibit the same barrier performance as that of the bottle in which the intermediate barrier layer has been formed up to the bottom portion (Comparative Example 1). Namely, by relatively thickly forming the bottom portion without barrier layer and by increasing the thickness of the intermediate barrier layer in the body portion which greatly affects the barrier performance, it is made possible to improve the impact resistance without deteriorating the barrier performance.

### Effects of the Invention:

Despite of its decreased thickness and weight, the multilayered plastic container of the present invention has excellent barrier performance and drop impact resistance, and effectively prevents the occurrence of cracks or interlayer peeling that so far occurred when the multilayered plastic containers were caused to fall down.

Further, the multilayered plastic container of the present invention exhibits excellent barrier performance and drop impact resistance even when it is used as a pressure-resistant container which may develop cracks or interlayer peeling to a conspicuous degree due to the internal pressure in case it receives impact of falling down.

### Brief Description of the Drawings:

[Fig. 1] is a side view of a multilayered plastic container of the present invention.
[Fig. 2] is a sectional view showing, partly on an enlarged scale, a layer structure of the bottom portion of the multilayered plastic container.

### Mode for Carrying Out the Invention:

### (Inner and outer layers)

The polyester resin used for the inner and outer layers of the invention is a conventional polyester resin comprising a dicarboxylic acid component and a diol component.

As the dicarboxylic acid component, it is desired that not less than 50% and, specifically, not less than 80% of the dicarboxylic acid component is a terephthalic acid from the standpoint of mechanical properties and thermal properties. However, carboxylic acid components other than the terephthalic acid may be contained, as a matter of course. As the carboxylic acid components other than the terephthalic acid, there can be exemplified isophthalic acid, naphthalenedicarboxylic acid, p-β-oxyethoxybenzoic acid, biphenyl-4,4'-dicarboxylic acid, biphenoxyethane-4,4'-dicarboxylic acid, 5-sodiumsulfoisophthalic acid, hexahydroterephthalic acid, adipic acid and sebacic acid.

As the diol component, it is desired that not less than 50% and, specifically, not less than 80% of the diol component is an ethylene glycol from the standpont of mechanical properties and thermal properties. As the diol components other than the ethylene glycol, there can be exemplified 1,4-butanediol, propylene glycol, neopentyl glycol, 1,6-hexylene glycol, diethylene glycol, triethylene glycol, cyclohexanedimethanol, ethylene oxide adduct of bisphenol A, glycerol and trimethylolpropane.

Further, the above dicarboxylic acid component and diol component may contain trifunctional or more highly functional polybasic acids and polyhydric alcohols; e.g., polybasic acids such as trimellitic acid, pyromellitic acid, hemimellitic acid, 1,1,2,2-ethanetetracarboxylic acid, 1,1,2-ethanetricarboxylic acid, 1,3,5-pentanetricarboxylic acid, 1,2,3,4-cyclopentanetetracarboxylic acid, and biphenyl-3,4,3',4'-tetracarboxylic acid, and polyhydric alcohols such as pentaerythritol, glycerol, trimethylolpropane, 1,2,6-hexanetriol, sorbitol and 1,1,4,4-tetrakis(hydroxymethyl)cyclohexane.

It is desired that the polyester resin used for the inner and outer layers of the invention has an intrinsic viscosity in a range of 0.60 to 1.40 dL/g as measured by using a mixed solvent of phenol and tetrachloroethane at a ratio of 1:1 at 30°C. To improve the heat resistance and moldability of the multilayered container, further, it is desired that the polyester resin has a melting point (Tm) of 200 to 275°C. Further, the glass transition point is desirably not lower than 30°C and, specifically, in a range of 50 to 120°C.

The polyester resin used for the inner and outer layers of the present invention can be blended with known blending agents for resins, such as coloring agent, antioxidant, stabilizer, various antistatic agents, parting agent, lubricant and nucleating agent according to known recipes in amounts by which they do not impair the quality of the finally molded product.

### (Intermediate barrier layer)

As the barrier resin for constituting the intermediate layer of the multilayered polyester container of the invention, there can be exemplified known barrier reins such as those having gas-barrier property, water vapor-barrier property and oxygen-absorbing/gas-barrier property. Concretely, there can be exemplified xylylene group-containing polyamide resins such as polymetaxylyleneadipamide and polymetaxylenesebacamide which are gas-barrier resins, ethylene/vinyl alcohol copolymer, and a cyclic olefin type resin which is a water vapor-barrier resin. Specifically, when a polymetaxyleneadipamide (MXD6) having excellent gas-barrier property is used, the present invention exhibits excellent action and effect to a striking degree.

The intermediate barrier layer may be formed of the above barrier resin alone or may be blended with other resins.

For example, there can be preferably used a clay-blended barrier resin composition comprising a polyester resin, a barrier resin and a clay, an oxygen-absorbing barrier resin composition comprising a polyester resin, a barrier resin, an oxidizing organic component and a transition metal catalyst, or a clay-blended oxygen-absorbing barrier resin composition comprising the above oxygen-absorbing barrier resin composition which is further blended with a clay.

The above clay-blended barrier resin composition and the oxygen-absorbing barrier resin composition have an islands-in-the-sea structure in which a dispersion phase of the barrier resin is formed in a continuous phase of the polyester resin, and, therefore, feature particularly excellent interlayer adhesion to the polyester resin that constitutes the inner and outer layers.

As the polyester resin, there can be used those exemplified above as the polyester resin for forming the inner and outer layers. Particularly preferably, there can be used the same resin as the one used for forming the inner and outer layers from the standpoint of improving the interlayer adhesion.

As the clay to be added to the clay-blended barrier resin, there can be used mica, vermiculite or smectite and, preferably, there can be used a lamellar silicate of the 2-octahedral type or 3-octahedral type having an electric charge density of 0.25 to 0.6. As the 2-octahedral type ones, there can be exemplified montmorillonite, beidellite and nontronite. As the 3-octahedral type ones, there can be exemplified hectorite and saponite.

It is particularly desired that the clay is swollen with an organic agent. In this case, among the above clays, montmorillonite is, particularly, desired since it has highly swelling property and is swollen due to the permeation of the organic agent so as to be spread among the layers.

As the organic agent, there can be, preferably, used a quaternary ammonium salt and, more preferably, a quaternary ammonium salt having at least one or more alkyl groups with not less than 12 carbon atoms and, concretely, a trimethyldodecylammonium salt or a trimethyltetradecylammonium salt.

It is desired that the clay is added to the barrier resin at a ratio of 1 to 10 parts by weight and, specifically, 1 to 8 parts by weight per 100 parts by weight of the barrier resin. If the amount of the clay is smaller than the above range, the gas-barrier property that should be obtained by the addition of the clay cannot be attained to a sufficient degree as compared to when its amount is in the above range. If the amount of the clay is larger than the above range, on the other hand, the moldability becomes inferior to when its amount is in the above range and, besides, the container exhibits pearl-like appearance which is not desirable when importance is given to the transparency of the container.

As the oxidizable organic component used for the oxygen-absorbing barrier resin composition, there can be exemplified the one having a side chain or a functional group at the end thereof and that can be oxidized or, concretely, a polyene oligomer or a polymer modified with an acid or an acid anhydride, such as butadiene or butadiene modified with maleic anhydride. As the transition metal catalyst, there can be used a metal component of the Group VIII of periodic table, such as iron, cobalt or nickel, to which only, however, the transition metal catalyst is in no way limited.

The oxidizable organic component is blended in an amount of, preferably, 2 to 10 parts by weight per 100 parts by weight of the barrier resin, and the transition metal catalyst is blended in an amount of, preferably, at least 300 ppm calculated as the metal.

In the intermediate barrier layer of the invention, the barrier resin or the barrier resin composition can be blended with the above-mentioned clay, oxidizing component and transition metal catalyst in combination, or with known blending agents for resin, such as deoxidizing agent, filler, coloring agent, heat stabilizer, weather-proofing agent, antioxidant, anti-aging agent, photo stabilizer, ultraviolet ray absorber, antistatic agent, metal soap and wax, and a reforming resin or rubber according to known recipes in amounts by which they do not hinder the object of the invention.

### (Multilayered structure)

The multilayered polyester container of the invention can employ various layer constitutions so far as it has an inner layer and an outer layer of a polyester resin and at least one intermediate barrier layer, and, as shown in Fig. 2, can, particularly preferably, employ a two-kind-three-layer constitution forming an intermediate barrier layer 12 between an inner layer 10 and an outer layer 11 of a polyester resin. It is, however, also allowable to employ a multilayered structure that has heretofore been employed for the multilayered polyester containers.

In the present invention, the interlayer adhesion has been improved among the inner layer, outer layer and intermediate layer, and there is no need of interposing an adhesive resin among the resin layers in producing the multilayered containers. The adhesive resin, however, may be interposed, as a matter of course.

As the adhesive resin, there can be exemplified a thermoplastic resin which contains a carbonyl (-CO-) group based on carboxylic acid, carboxylic anhydride, carboxylate, carboxylic acid amide or carboxylic acid ester on a main chain or a side chain thereof at a concentration of 1 to 700 milliequivalents (meq)/100 g of the resin and, specifically, 10 to 500 meq/100 g of the resin. Preferred examples of the adhesive resin include ethylene/acrylic acid copolymer, ionically crosslinked olefin copolymer, maleic anhydride-grafted polyethylene, maleic anhydride-grafted polypropylene, acrylic acid-grafted polyolefin, ethylene/vinyl acetate copolymer and copolymerized polyester.

The multilayered polyester container of the invention has a thickness in the body portion thereof which is as thin as less than 0.36 mm and, specifically, in a range of 0.20 to 0.30 mm though it may vary depending upon the volume (content) of the container, use of the container or the kind of the barrier resin that is used.

In the invention, further, no intermediate barrier layer has been formed on the inside of the grounding portion of the bottom portion. It is, therefore, desired that the ratio of thickness of the intermediate layer in the body portion is set to be higher than that of the prior art. The thickness of the intermediate barrier layer is, preferably, in a range of 5 to 30% and, specifically, 10 to 20% of the whole thickness of the container body portion though it may vary depending upon the resin or the resin composition constituting the intermediate barrier layer that is used. The intermediate layer having a thickness larger than the above range is not desirable from the standpoint of economy, moldability and transparency of the container. If the thickness of the intermediate layer is smaller than the above range, on the other hand, it becomes difficult to impart barrier property to a sufficient degree.

If there are a plurality of intermediate layers comprising the barrier resin composition as described above, it is desired that the thickness of the intermediate layers as a whole is in the range of 10 to 30% in the body portion.

### (Production method)

The multilayered polyester container of the present invention can be produced by a known method of producing multilayered plastic containers disclosed in, for example, JP-A-1-254539 and JP-A-2004-130650 except controlling the position of the lower end of the intermediate barrier layer. Described below is a method of producing a pressure-resistant biaxially stretch-blow-molded container that is most desirably used as the multilayered polyester container of the invention.

In producing the pressure-resistant biaxially stretch-blow-molded container of the invention, the multilayered preform is so formed that the lower end of the intermediate barrier layer is positioned on the grounding portion or outside of the grounding portion in the radial direction of the container in the state of a finally molded article and is, preferably, positioned at a central portion between the grounding portion and the uppermost end of the bottom portion, or is positioned at the uppermost end of the bottom portion over the central portion or under the uppermost end thereof. The preform can be molded by a conventional injection-molding method or a compression-molding method. To correctly and reliably control the position of the lower end of the intermediate barrier layer, however, it is desired that the preform is molded by the simultaneous injection molding or the sequential injection molding. The intermediate barrier layer is sealed in the inner and outer layers of the polyester resin.

It is desired that the multilayered preform is molded by the stretch-blow molding of the cold parison system as described above. It is, however, also allowable to apply the hot parison system which executes the stretch-blow molding without permitting the molded multilayered preform to be completely cooled.

Prior to the stretch-blow molding, the preform is preheated to a stretching temperature by such means as hot air, infrared ray heater or high-frequency induction heating. In the present invention, however, it is desired that the reform is stretch-blown by being heated at a temperature higher than a temperature of 110 to 120°C that is, usually, employed by the stretch-blow molding.

The heated preform is fed into a known stretch-blow-molding machine, set into a metal mold, pulled and stretched in the axial direction by pushing a stretching rod therein, and is stretched in the circumferential direction by blowing a fluid therein. Here, when the intermediate barrier layer is formed of a barrier resin composition blended with clay, it is desired that the multilayered preform is internally heated by using a heating body heated at 300 to 600°C and/or using the hot air of 150 to 220°C.

That is, in biaxially stretch-blow molding the preform heated at the above temperature range, the heating body heated at a high temperature is inserted in the preform to heat the interior thereof and/or the hot air of a high temperature is blown therein. Therefore, the temperature is further elevated in the interior of the preform and a high temperature is maintained in the interior of the preform at the time of stretch-blow molding, whereby relaxation of strain is promoted to also relax strain in the intermediate layer formed of the clay-blended barrier resin composition having a high degree of stress caused by stretching, effectively preventing the transparency and gas-barrier property from being deteriorated.

It is desired that the time for heating the interior is varied depending upon the preheating temperature of the preform and the preset temperature of the heating body used for heating the interior. Desirably, the time for heating is in a range of 8 to 20 seconds and, specifically, 10 to 15 seconds. Further, the hot air to be used for the stretch-blow molding is blown into the preform set in the metal mold for 2 to 3 seconds.

Further, when the heat resistance is to be imparted to the multilayered plastic container, the mouth-and-neck portion of the preform may also be heat-crystallized and molded by a known method of producing heat-resistant containers, such as a two-step blow-molding method.

The pressure-resistant polyester container which is the final product is, desirably, stretched at a ratio of 1.5 to 25 times as the area ratio, at a ratio of 1.2 to 6 times as the stretching ratio in the axial direction and at a ratio of 1.2 to 4.5 times as the stretching ratio in the circumferential direction. Thus, there can be produced a pressure-resistant polyester container of a so-called petaloidal shape as shown in Fig. 1 or having a traditional pressure-resistant bottom shape such as a champaign shape having a recessed portion formed at the center of the bottom portion.

The pressure-resistant polyester container obtained by the present invention has a polyester resin density of not less than 1.353 g/cm³ in the container body portion, a crystallinity of not less than 15% as measured by the densitometric method, and also features excellent transparency.

### EXAMPLES

### <Preparation of multilayered bottles>

By using a coinjection-molding machine furnished with a coinjection machine for inner layer and outer layer, and an injection machine for intermediate layer, a multilayered preform was molded for producing a pressure-resistant bottle. The layer was of a two-kind-three-layer constitution (inner layer/intermediate layer/outer layer). The following PET material was used for the inner layer and the outer layer. As the intermediate layer, there were used the following barrier material (comprising MXD6 blended with a clay) and dried pellets of the following PET material) that were dry-blended at a weight ratio of 4:6. These materials were thrown into a hopper of the molding machine and were coinjection-molded. The multilayered preform weighed 24 grams and in all Examples and Comparative Examples, the ratio of the weight of the resin of the inner and outer layers was 95% by weight and the ratio of the weight of the resin of the intermediate layer was 5% by weight. The intermediate layer was molded at a temperature of 280 to 290°C. By controlling the injection timing of the intermediate layer injection machine, the multilayered preforms were so molded that the positions of the lower end (hereinafter simply "end position") of the barrier layer were at the positions of the multilayered bottles shown in Table 1. By controlling the injection timing of the intermediate layer injection machine, no intermediate layer resin was injected for the mouth-and-neck portion, the intermediate layer resin was injected for the shoulder portion and for the lower portion thereof, and no intermediate layer resin was injected for the portions lower than the positions corresponding to the intermediate layer positions in Examples and Comparative Examples shown in Table 1. The thus obtained multilayered preforms were biaxially stretch-blow-molded into 500-ml pressure-resistant bottles (body portion thickness of 0.25 mm, intermediate layer thickness of 40 µm) to prepare multilayered bottles which were evaluated for their barrier properties and drop impact resistances.

### (Materials used)

PET material: Polyethylene terephthalate copolymerized with an isophthalic acid (isophthalic acid, 1.5 mol%, IV = 0.83 dL/g).
Barrier material: Polymethaxylene adipamide (MXD6, 97%) + organically treated clay (montmrillonite, 3%).

### (Method of evaluation, conditions)

### <Barrier property>

The obtained multilayered bottle was evaluated for its barrier property as the rate of carbon dioxide gas permeation.

The obtained multilayered bottle was filled with carbonated water to a gaseous volume of 4.0, was put into a sealed chamber controlled to be 23°C 50%RH, and the concentration of carbon dioxide of the atmosphere in the chamber was measured to calculate the rate of carbon dioxide permeation of the bottle (cc/bottle/day). At a moment when the rate of carbon dioxide permeation became nearly steady, the bottle was evaluated for its barrier property on the following basis. ○ and Δ represent permissible ranges as the products.
○: Rate of carbon dioxide permeation is less than 4.7.
Δ: Rate of carbon dioxide permeation is not less than 4.7 but is less than 5.0.
×: Rate of carbon dioxide permeation is not less than 5.0.

### <Drop impact resistance>

The obtained multilayered bottle was filled with carbonated water to a gaseous volume of 4.0 and was preserved at 23°C for one day. Thereafter, the bottle was permitted to fall with the bottom portion down one time onto a concrete floor from a height of 2.0 meters, and the occurrence of cracks and delamination was visually evaluated. Upon repeating n = 3, the bottle of the most serious degree was evaluated for its drop impact resistance on the following basis. ○ and Δ represent permissible ranges as the products.
○: No crack, no delamination.
Δ: No crack, delamination to a slight degree.
×: Cracked and delaminated to a large degree.

### <Overall evaluation>

Based on the evaluated barrier properties and drop impact resistances, the overall evaluation was rendered on the following basis. ○ and Δ represent permissible ranges as the products.
○: Any bottle is evaluated to be "O".
Δ: Any bottle is evaluated to be "○" or "Δ" while some are evaluated to be "Δ".
X: At least any one is evaluated to be "×".

### <Example 1>

A multilayered bottle was prepared according to the above-mentioned specifications having the end position of the intermediate barrier layer at C (uppermost end of the valley) in Fig. 1, and was evaluated for its barrier property and drop impact resistance. The specifications of the bottle and the evaluated results were as shown in Table 1.

### <Example 2>

A multilayered bottle was prepared in the same manner as in Example 1 but having the end position of the intermediate barrier layer at D (central portion between the grounding portion and the uppermost end of the valley) in Fig. 1, and was evaluated for its barrier property and drop impact resistance. The specifications of the bottle and the evaluated results were as shown in Table 1.

### <Example 3>

A multilayered bottle was prepared in the same manner as in Example 1 but having the end position of the intermediate barrier layer at E (grounding potion) in Fig. 1, and was evaluated for its barrier property and drop impact resistance. The specifications of the bottle and the evaluated results were as shown in Table 1.

### <Example 4>

A multilayered bottle was prepared in the same manner as in Example 1 but having the end position of the intermediate barrier layer at B (uppermost end of the bottom portion) in Fig. 1, and was evaluated for its barrier property and drop impact resistance. The specifications of the bottle and the evaluated results were as shown in Table 1.

### <Example 5>

A multilayered bottle was prepared in the same manner as in Example 1 but without adding the organically treated clay to the intermediate barrier layer, and was evaluated for its barrier property and drop impact resistance. The specifications of the bottle and the evaluated results were as shown in Table 1.

### <Example 6>

A multilayered bottle was prepared in the same manner as in Example 1 but using the MXD6 nylon only as the intermediate barrier layer, and was evaluated for its barrier property and drop impact resistance. The specifications of the bottle and the evaluated results were as shown in Table 1.

### <Example 7>

A multilayered bottle was prepared in the same manner as in Example 3 but molding the multilayered preform and the multilayered bottle in a shape adapted to obtaining a 500-ml heat-resistant bottle, filling ion-exchanged water for evaluating the drop impact resistance and without evaluating barrier property. The multilayered bottle was evaluated for its drop impact resistance. The specifications of the bottle and the evaluated results were as shown in Table 1.

### <Comparative Example 1>

A multilayered bottle was prepared in the same manner as in Example 1 but having the end position of the intermediate barrier layer at G (barrier layer over the whole bottom surface) in Fig. 1, and was evaluated for its barrier property and drop impact resistance. The specifications of the bottle and the evaluated results were as shown in Table 1.

### <Comparative Example 2>

A multilayered bottle was prepared in the same manner as in Example 1 but having the end position of the intermediate barrier layer at F (central portion on the radius of the bottom) in Fig. 1, and was evaluated for its barrier property and drop impact resistance. The specifications of the bottle and the evaluated results were as shown in Table 1.

### <Comparative Example 3>

A multilayered bottle was prepared in the same manner as in Example 1 but having the end position of the intermediate barrier layer at A (central portion of the body) in Fig. 1, and was evaluated for its barrier property and drop impact resistance. The specifications of the bottle and the evaluated results were as shown in Table 1.

**Table 1**

| | Intermediate barrier layer | | Evaluation | | |
|---|---|---|---|---|---|
| | Kind | End position | Barrier property (cc/bottle/day) | Drop impact resistance | Overall evaluation |
| Ex. 1 | blend (with clay) | *2 C | ○(4.54) | ○ | ○ |
| Ex. 2 | blend (with clay) | *3 D | ○(4.53) | ○ | ○ |
| Ex. 3 | blend (with clay) | *4 E | ○(4.53) | Δ | Δ |
| Ex. 4 | blend (with clay) | *5 B | Δ(4.79) | ○ | Δ |
| Ex. 5 | blend (without clay) | *2 C | ○(4.61) | ○ | ○ |
| Ex. 6 | nylon only | *2 C | Δ(4.72) | Δ | Δ |
| Ex. 7 (*1) | blend (with clay) | *6 E | - | Δ | Δ |
| Comp. Ex. 1 | blend (with clay) | *7 G | ○(4.53) | × | × |
| Comp. Ex. 2 | blend (with clay) | *8 F | ○(4.53) | × | × |
| Comp. Ex. 3 | blend (with clay) | *9 A | ×(5.90) | ○ | × |

| | | | | | |
|---|---|---|---|---|---|
| *1: Heat-resistant bottle *2: uppermost end of valley *3: center between grounding portion and uppermost end of valley *4: grounding portion *5: uppermost end of bottom portion *6: grounding portion *7: barrier layer over the whole bottom surface *8: central portion on the radius of bottom *9: central portion of the body | | | | | |

### Industrial Applicability:

Despite of its decreased thickness and weight, the multilayered plastic container of the present invention has excellent barrier property and drop impact resistance effectively preventing the cracking or interlayer peeling in case it is fallen down even when it is filled with a carbonated beverage or the like that spontaneously produces pressure. Therefore, the multilayered plastic container of the invention can be particularly preferably used as a pressure-resistant polyester container for containing such beverages as carbonated soft drinks, carbonated beverages containing juice and like beverages, though not limited thereto only.

## Claims

1. A pressure-resistant multilayered plastic container (1) comprising, in at least a side wall portion of the container (1), an inner layer (10) and an outer layer (11) of a polyester resin, and an intermediate barrier layer (12) of a barrier resin, the container bottom portion (5) including feet (9) having grounding portions (8) and valleys (6) that are alternately formed, **characterised in that** the inner layer (10) and the outer layer (11) are formed of a polyethylene terephthalate, and the intermediate barrier layer (12) is formed of a mixture of the polyethylene terephthalate and the barrier resin and the lower end (12a) of said intermediate barrier layer (12) in the radial direction of the container (1) is positioned on the grounding portion (8) of the container bottom portion (5) or outside of the grounding portion (8) of the container bottom portion (5) in the radial direction of the container (1), and the lower end (12a) of said intermediate barrier layer (12) in the axial direction of the container (1) is positioned at a central portion between said grounding portion (8) and the uppermost end (6a) of the valley (6) or higher than the central portion.

2. The multilayered plastic container (1) according to claim 1, wherein said barrier resin contains a clay.

## Patentansprüche

1. Druckfester, mehrschichtiger Kunststoffbehälter (1), der Folgendes umfasst: in zumindest einem Seitenwandbereich des Behälters (1) eine innere Schicht (10) und eine äußere Schicht (11) aus einem und eine dazwischenliegende Barriereschicht (12) aus einem Barriereharz, wobei der Bodenbereich (5) des Behälters Füße (9) einschließt, die bodenberührende Bereiche (8) und Senken (6) aufweisen, die abwechselnd ausgebildet sind, **dadurch gekennzeichnet, dass** die innere Schicht (10) und die äußere Schicht (11) aus einem Polyethylenterephthalat gebildet sind und die dazwischenliegende Barriereschicht (12) aus einer Mischung aus dem Polyethylenterephthalat und dem Barriereharz gebildet ist und das untere Ende (12a) der genannten dazwischenliegenden Barriereschicht (12) in radialer Richtung des Behälters (1) an dem bodenberührenden Bereich (8) des Bodenbereichs (5) des Behälters oder außerhalb des bodenberührenden Bereichs (8) des Bodenbereichs (5) des Behälters in radialer Richtung des Behälters (1) positioniert ist und das untere Ende (12a) der genannten dazwischenliegenden Barriereschicht (12) in axialer Richtung des Behälters (1) am einem mittleren Bereich zwischen dem genannten bodenberührenden Bereich (8) und dem obersten Ende (6a) der Senke (6) oder höher als der mittlere Bereich positioniert ist.

2. Mehrschichtiger Kunststoffbehälter (1) nach anspruch 1 , worin das genannte Barriereharz einen Ton enthält.

## Revendications

1. Contenant en plastique multicouches résistant à la pression (1) comprenant, dans au moins une partie de paroi latérale du contenant (1), une couche interne (10) et une couche externe (11) d'une résine de polyester, et une couche barrière intermédiaire (12) d'une résine barrière, la partie inférieure (5) du contenant comportant des pieds (9) ayant des parties de contact (8) et des creux (6) formés en alternance, **caractérisé en ce que** la couche interne (10) et la couche externe (11) sont formées en téréphtalate de polyéthylène, et la couche barriére intermédiaire (12) est formée d'un mélange de téréphtalate de polyéthylène et de résine barrière et l'extrémité inférieur (12a) de ladite couche barriére intermédiaire (12) dans le sens radial du contenant (1) est positionnée sur la partie de contact (8) de la partie inférieure (5) du contenant ou en dehors de la partie de contact (8) de la partie inférieure (5) du contenant dans le sens radial du contenant (1), et l'extrémité inférieure (12a) de ladite couche barriére intermédiaire (12) dans le sens axial du contenant (1) est positionnée au niveau d'une partie centrale entre ladite partie de contact (8) et l'extrémité supérieure (6a) du creux (6) ou plus haut que la partie centrale.

2. Contenant en plastique multicouches (1) selon la revendication 1, dans lequel ladite résine barrière contient une argile.
